# EUROPEAN PATENT APPLICATION

(11) **EP 4 485 394 A1**
(43) Date of publication of application: **01.01.2025**
(21) Application number: 23182375.8
(22) Date of filing: 29.06.2023
(51) Int. Cl.: G06V 20/64

(54) **ANNOTATION OF OBJECT STATES IN LIDAR OUTPUT DATASETS**

(71) Applicant: Zenseact AB, 417 56 Gothenburg (SE)
(72) Inventor: FLORBÄCK, Johan, 41483 Göteborg (SE); VILLYSON, Johan, 120 55 Årsta (SE)
(74) Representative: Zacco Sweden AB

(57) **Abstract**

A method for generating an annotated dataset for training and/or verifying machine-learning algorithms and related aspects are disclosed. The method comprises associating point clouds across a plurality of lidar output datasets in order to link each point cloud across the plurality of lidar output datasets that represent the same object, where the plurality of lidar output datasets comprise point-cloud representations of one or more objects over a time period. The method further comprises, for each object of the one or more objects, aligning the associated point clouds representing the same object across the plurality of lidar output datasets using a point-cloud registration algorithm configured to spatially transform the point cloud of one or more lidar output datasets in order to align the associated point clouds representing the same object across the plurality of lidar output datasets into a globally consistent coordinate space. The method further comprises, for each object of the one or more objects, annotating the aligned point cloud, and converting the annotation to an original coordinate space of the plurality of lidar output datasets so to obtain an annotation for each lidar output dataset of the plurality of lidar output datasets.

## Description

### TECHNICAL FIELD

The herein disclosed technology relates to the general field of computer science and machine-learning. In particular, but not exclusively the disclosed technology relates to methods for generating annotated datasets for training machine-learning algorithms suitable for autonomous driving applications.

### BACKGROUND

Autonomous systems have the ability to act independently of direct human control and in unrehearsed conditions. These systems enable a whole range of applications, such as self-driving cars, humanoid robots and post-delivering drones.

Machine-learning is a promising technology in the area of perception, for example in order to detect and classify objects in images, video streams and/or LIDAR point clouds. However, the problem with machine-learning algorithms such as neural networks is that they quickly reach some level of performance (maturity), and then extremely large amounts of data are required to get truly high performance.

In more detail, the training of machine-learning algorithms such as neural networks, often requires large amounts of annotated/labelled data. In the case of computer vision object detection this annotation could for instance include marking the presences of cars, pedestrians, traffic signs, and so forth on a large number of images and then training a neural network to predict their presence, location, distance from the observer, etc. In short, every property such machine-learning algorithms predict requires some labels in the data set.

The performance a neural network can achieve in solving its goal depends on the quality and size of the dataset it is trained with. However, large quantities of high-quality annotated data are extremely time consuming and/or costly to obtain.

Thus, there is a need in the art for new and efficient solutions for generating annotations in datasets used for training or verifying machine-learning algorithms in order to be able to provide more performant autonomous systems.

### SUMMARY

The herein disclosed technology seeks to mitigate, alleviate or eliminate one or more of the above-identified deficiencies and disadvantages in the prior art to address various problems relating to generation of large volumes of annotated datasets.

Various aspects and embodiments of the disclosed invention are defined below and in the accompanying independent and dependent claims.

A first aspect of the disclosed technology comprises a method for generating an annotated dataset for training and/or verifying machine-learning algorithms. The method comprises associating point clouds across a plurality of lidar output datasets in order to link each point cloud across the plurality of lidar output datasets that represent the same object, where the plurality of lidar output datasets comprise point-cloud representations of one or more objects over a time period. The method further comprises, for each object of the one or more objects, aligning the associated point clouds representing the same object across the plurality of lidar output datasets using a point-cloud registration algorithm configured to spatially transform the point cloud of one or more lidar output datasets in order to align the associated point clouds representing the same object across the plurality of lidar output datasets into a globally consistent coordinate space. The method further comprises, for each object of the one or more objects, annotating the aligned point cloud, and converting the annotation to an original coordinate space of the plurality of lidar output datasets so to obtain an annotation for each lidar output dataset of the plurality of lidar output datasets.

A second aspect of the disclosed technology comprises a computer program product comprising instructions which, when the program is executed by a computing device, causes the computing device to carry out the method according to any one of the embodiments of the first aspect disclosed herein. With this aspect of the disclosed technology, similar advantages and preferred features are present as in the other aspects.

A third aspect of the disclosed technology comprises a (non-transitory) computer-readable storage medium comprising instructions which, when executed by a computing device, causes the computing device to carry out the method according to any one of the embodiments of the first aspect disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises a system for generating an annotated dataset for training and/or verifying machine-learning algorithms. The system comprises control circuitry configured to associate point clouds across a plurality of lidar output datasets in order to link each point cloud across the plurality of lidar output datasets that represent the same object, where the plurality of lidar output datasets comprises point-cloud representations of one or more objects over a time period. The control circuitry is further configured to, for each object of the one or more objects, align the associated point clouds representing the same object across the plurality of lidar output datasets using a point-cloud registration algorithm configured to spatially transform the point cloud of one or more lidar output datasets in order to align the associated point clouds representing the same object across the plurality of lidar output datasets into a globally consistent coordinate space. Moreover, the control circuitry is configured to, for each object of the one or more objects, annotate the aligned point clouds, and convert the annotation to an original coordinate space of the plurality of lidar output datasets so to obtain an annotation for each lidar output dataset of the plurality of lidar output datasets. With this aspect of the disclosed technology, similar advantages and preferred features are present as in the other aspects.

A fifth aspect of the disclosed technology comprises a server comprising the system according to any one of the embodiments of the fourth aspect disclosed herein. With this aspect of the disclosed technology, similar advantages and preferred features are present as in the other aspects.

A sixth aspect of the disclosed technology comprises a cloud environment comprising one or more remote servers according to any one of the embodiments of the fifth aspect disclosed herein. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that significant time saving can be achieved for generating large annotated datasets of lidar output.

An advantage of some embodiments is that large datasets of accurately annotated lidar output datasets can be obtained, thereby providing means to improve and/or verify machine-learning algorithms, and in particular machine-learning algorithms used for perception features in automotive applications.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart representation of a method for generating an annotated dataset for training and/or verifying machine-learning algorithms in accordance with some embodiments.
Fig. 2 is an illustration of a plurality of lidar output datasets and aligned point clouds in accordance with some embodiments.
Fig. 3 is an illustration of a plurality of annotated lidar output datasets and annotated aligned point clouds in accordance with some embodiments.
Fig. 4 is a schematic block diagram representation of a system for generating an annotated dataset for training and/or verifying machine-learning algorithms, and schematic illustrations of a server comprising such a system and a cloud environment comprising a plurality of servers in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

As mentioned in the foregoing, in order to be able to verify the performance of a machine learning algorithm or to train a machine-learning algorithm, a high volume of high-quality ground truth data is generally required. In particular for detecting, tracking, and/or classifying objects. This is even more pronounced in the fields of Automated Driving Systems (ADS) as the machine learning algorithms used for detecting, tracking, and/or classifying objects have a high impact on the overall traffic safety, both from the perspective of the vehicle occupants and from the perspective of other road users. The ground truth data is generally formed by annotated datasets. However, for object detection or tracking purposes, the annotated datasets are obtained from annotating object states in a continuous sequence of data (e.g. camera images, lidar output, etc.) by placing bounding boxes (or polyhedrons) into 2D or 3D space for several frames or datasets (e.g. lidar sweeps). This task of placing bounding boxes in a continuous sequence of data is extremely time consuming, which results in a risk of inadequate accuracy of annotations e.g., due to human error.

Therefore, the herein presented embodiments provide a solution where, instead of generating annotations (e.g., by the placement of bounding boxes) for each individual frame, e.g., directly in an annotation GUI, one restructures the process to a method where one aligns the sensor detections (lidar point clouds) belonging to an associated object (i.e., the same object) from several datasets or "frames", and then one annotates the aligned sensor detections and converts the annotation to an original coordinate space of the several datasets such that an annotation is obtained for each dataset or frame. This process requires a reduced number of steps as compared to the conventional method of generating annotations, and is more easily aided by automatic algorithms. Thus, advantages in terms of time efficiency, cost effectiveness and increased annotation accuracy are readily achievable.

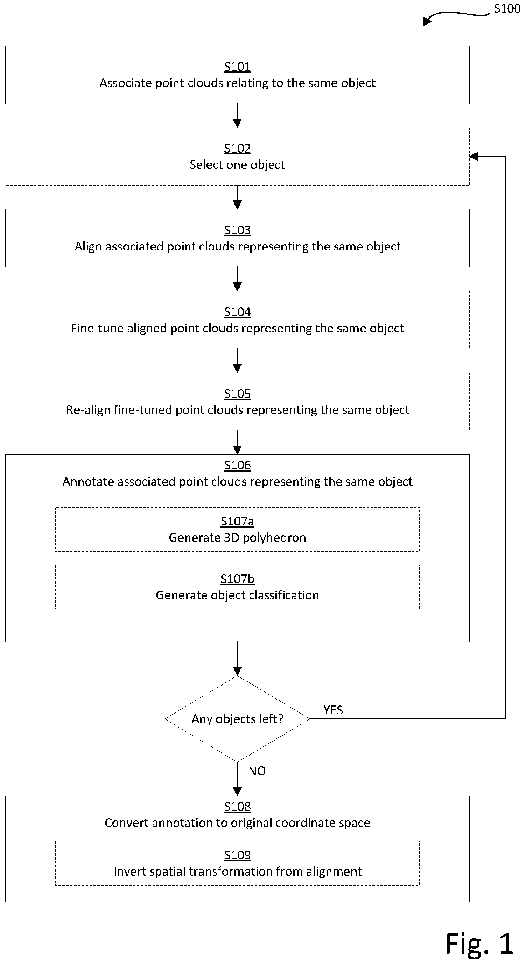

Fig. 1 is a schematic flowchart representation of a method S100 for generating an annotated dataset for training and/or verifying machine-learning algorithms in accordance with some embodiments. The method S100 may be a computer-implemented method S100, performed by a computer. The computer may for example comprise one or more processors and one or more memories coupled to the one or more processors, wherein the one or more memories store one or more programs that cause the computer to perform the steps, services and functions of the method S100 disclosed herein when executed by the one or more processors.

The method S100 comprises associating S101 point clouds across a plurality of light detection and ranging (lidar) output datasets in order to link each point cloud across the plurality of lidar output datasets that represent the same object. The plurality of lidar output datasets comprise point-cloud representations of one or more objects over a time period. A lidar output dataset may in the present context be understood as a lidar output "frame" or a "3D map" of a scene in front of the lidar. More specifically, a lidar is generally configured to scan a laser along a horizontal direction and/or a vertical direction from which a 3D map of the scene in front of the lidar is formed. However, a lidar may be configured to scan a laser in a randomized manner from which the 3D map of the scene in front of the lidar may be formed. Every such map (i.e., every horizontal and/or vertical sweep) may be referred to as a lidar output dataset or lidar output "frame". A lidar typically outputs 10 to 30 frames per second, i.e. a lidar typically has a frame rate of 10 to 30 frames per second (fps). An "object" may in the present case be a dynamic object, such as a vehicle (e.g., a car, a truck, a bus, a motorcycle, etc.), a pedestrian, or a cyclist, or a static object such as a traffic sign, a traffic light, a tree, a light pole, or other obstacles. The data association S101 may be performed using a Kalman filter or object filter configured to track an object in the lidar output datasets, where the data association may be construed as a sub-step in the general object tracking process of the filters.

The method S100 may further comprise identifying one or more objects in the plurality of lidar output datasets, and then associating S101 the point clouds across the plurality of lidar output datasets in order to link each point cloud across the plurality of lidar output datasets that represent the same object. Alternatively, the method S100 may comprise obtaining information about one or more identified objects in the plurality of lidar output datasets. In other words, before the points clouds of the same object are associated S101 to each other, an object identification process may be employed.

In some embodiments, the method S100 further comprises selecting S102 one object out of the one or more objects whose point cloud representations have been associated across the plurality of lidar output datasets.

Furthermore, in accordance with some embodiments, the one or more objects are one or more rigid-body objects. In the context of the present disclosure, a rigid-body object refers to an object or part of a vehicle that maintains its shape and does not undergo significant deformation or deformation under normal operating conditions. A rigid-body object can be a vehicle, a component of a vehicle, such as the body panels, chassis, or wheels, which are designed to remain structurally intact and retain their shape during vehicle motion. Other examples of rigid body objects are pedestrian, bicycles, traffic signs, trees, or any other similar object that may for an obstacle for the vehicle.

For each object of the one or more objects (or for the selected S102 object), the method S100 further comprises (automatically) aligning S103 the associated point clouds representing the same object across the plurality of lidar output datasets using at least a point-cloud registration algorithm configured to spatially transform the point cloud of one or more lidar output datasets in order to align the associated point clouds representing the same object across the plurality of lidar output datasets into a globally consistent coordinate space.

Point cloud registration is the process of aligning multiple point clouds in a common coordinate system. One widely used algorithm for point cloud registration is the Iterative Closest Point (ICP) algorithm. Within the ICP algorithm, one common variant is the Point-to-Plane ICP, which incorporates the surface normals of the point clouds to improve the alignment accuracy. The Point-to-Plane ICP algorithm extends the basic ICP algorithm by considering not only the point-to-point distances but also the point-to-plane distances. The main idea is to estimate the transformation that minimizes the distance between each point in the source point cloud and the corresponding tangent plane in the target point cloud. By incorporating the point-to-plane distances, the Point-to-Plane ICP algorithm can better handle surface irregularities and improve the accuracy of the alignment. This is particularly useful when aligning point clouds captured from surfaces with complex geometries. Another variant of the ICP algorithm is the Generalized-ICP (G-ICP), which handles larger initial misalignments and deals with outliers more effectively.

The Point-to-Plane ICP algorithm may comprise an initialization step where an initial estimate of the transformation between two point clouds (out of the plurality of point clouds) may be provided. Next, a correspondence estimation is performed, where for each point in the source point cloud, the algorithm finds its corresponding point in the target point cloud. Additionally, it estimates the corresponding tangent plane normal in the target point cloud for each point in the source point cloud. Next, a transformation estimation is performed, where once the correspondences and the corresponding tangent plane normals are established, the algorithm estimates the transformation that minimizes the point-to-plane distances. This is typically achieved through an optimization process, such as least squares or nonlinear optimization, considering both point-to-point and point-to-plane distances. Then, a transformation refinement step is performed where the estimated transformation is applied to the source point cloud, aligning it with the target point cloud. Further, the algorithm checks for convergence by measuring the change in the estimated transformation between iterations. If the change falls below a certain threshold or a maximum number of iterations is reached, the algorithm terminates. Otherwise, it goes back to the correspondence estimation and repeats the process. If there are multiple point clouds to register, the algorithm can be repeated for each pair of point clouds, using the aligned point clouds from the previous step as the new source and target.

An alternative to the ICP algorithm for point cloud registration is the Normal Distributions Transform (NDT), which is a probabilistic approach that represents point clouds as a set of Gaussian distributions, allowing for efficient registration and alignment.

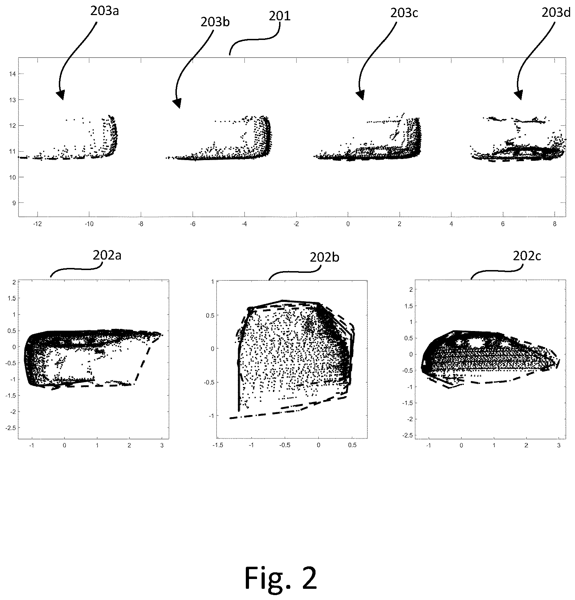

Turning briefly to Fig. 2, which shows a plurality of lidar output datasets 201, each containing a point cloud representation 203a-203d of an object, and aligned point clouds 202a-202c representing the same object across the plurality of lidar output datasets in a globally consistent coordinate space. In more detail, the top plot 201 illustrates 4 lidar output datasets 203a-203d, or 4 lidar output frames 203a-203d, indicating the presence of an object in the sensor range of the lidar. The point clouds 203a-203d are captured by a lidar mounted on a vehicle driving along another vehicle (represented by the point clouds 203a-203d detected by the lidar. Depending on the position of the ego-vehicle (i.e. vehicle having the lidar) relative to the other vehicle, the point clouds 203a-203d will have different shapes.

The bottom plots 202a-202c depict the aligned point clouds from three different perspectives, namely a top view perspective 202a, a back/front view perspective 202b and a side view perspective 202c. As shown in the aligned point clouds 202a-202c the different lidar output datasets are aligned in a common globally consistent coordinate space, and together they form the shape of a car in the depicted example. As readily understood by the skilled reader, the aligned point clouds 202a-202c contain a larger number of lidar output datasets than those depicted in the top plot 201, which only shows a small sample set of the total number of lidar output datasets used in the alignment.

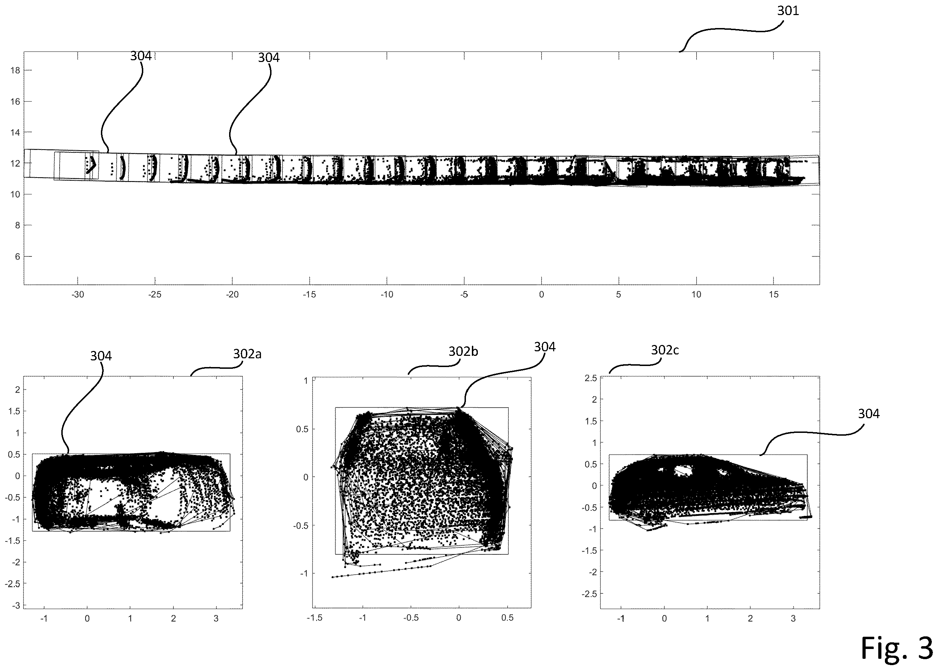

It should also be noted that in order to improve visibility and to avoid cluttering in Fig. 2, the lidar output datasets 203a-203d have been filtered to only show detections of a single object over a time period. In general, the raw output from the lidar will contain various detections within the sensor range of the lidar. Moreover, in the top plot 201 the sample rate has been reduced to improve visibility, and as readily understood by the person of ordinary skill in the art, the lidar output datasets 203a-203d may be overlapping (as for example shown in the top plot 301 of Fig. 3).

Reverting back to Fig. 1, the method S100 may further comprise fine-tuning S104 the aligned S103 point clouds for each object of the one or more objects. In more detail, the fine-tuning S104 may comprise moving one or more of the associated S101 point clouds so to better correlate with the plurality of point clouds relating to the same object. For example, if the alignment S103 results in that one or more (e.g. 1 to 10 point clouds) of the plurality of point clouds (e.g. 600 point clouds) are offset with respect to the bulk of the point-clouds, then these point clouds that are offset from the bulk can be fine-tuned so to generate a better total alignment. In other words, the fine-tuning S104 may comprise moving one or more "outliers" of the associated S101 point clouds. The method S100 may further comprise re-aligning S105 the associated point clouds by applying the point-cloud registration algorithm on any non-fine-tuned point clouds. In other words, one the outliers have been moved/adjusted, the remaining point clouds are re-aligned again using the point-cloud registration algorithm in order to improve the overall alignment of the associated S101 point clouds.

The method S100 further comprises annotating S106 the aligned S103 point clouds for each object of the one or more objects. In some embodiments, the method S100 comprises annotating S106 the re-aligned S105 point clouds for each object of the one or more objects. In some embodiments, the step of annotating S106 the aligned point clouds comprises generating S107a a three-dimensional (3D) polyhedron enclosing the aligned point clouds for each object of the one or more objects. The 3D polyhedron may for example be a 3D bounding box. However, as readily understood, depending on the desired output from the machine-learning algorithm to be trained on the annotated dataset, other bounding box shapes may be employed. Still further, in some embodiments, the step of annotating S106 the aligned S103 point clouds comprises generating S107b an object classification. For example, an object classification may for example be a car, a motor cycle, a bicycle, a truck, a bus, a pedestrian, a traffic sign, a tree, or the like.

Further, the method S100 comprises, for each object of the one or more objects, (automatically) converting S108 the annotation (i.e., the annotated point S106 clouds) to an original coordinate space of the plurality of lidar output datasets so to obtain an annotation for each lidar output dataset of the plurality of lidar output datasets. Moreover, in some embodiments, the step of converting S108 the annotation comprises, for each object of the one or more objects, inverting S109 the spatial transformation performed during the alignment S103 of the associated point clouds. In the case where the annotation S106 comprises generating S107a a 3D polyhedron, the step of converting S108 the annotation may comprise converting the 3D polyhedron to the original coordinate space of the lidar output data frames so to obtain a 3D polyhedron for each frame of the plurality of frames.

Turning briefly to Fig. 3, which is an illustration of a plurality of annotated lidar output datasets (top plot 301) and annotated aligned point clouds (bottom plots 302a-302c) in accordance with some embodiments. Similar to Fig. 2, the top plot 301 depicts the point clouds of the plurality of lidar output datasets and the bottom three plots 302a-302c depict the aligned point clouds from three different perspectives, namely a top view perspective 302a, a back/front view perspective 302b and a side view perspective 302c. As shown in the aligned point clouds 302a-302c the different lidar output datasets are aligned in a common globally consistent coordinate space, and together they form the shape of a car in the depicted example. However, in contrast to the plots of Fig. 2, the three plots 302a-302c further include the applied annotation, here in the form of a 3D bounding box. Further, the top plot 301 of Fig. 3 is an illustration showing the annotations (i.e., the 3D bounding boxes) once they have been converted to the original coordinate space of the plurality of lidar output datasets.

Executable instructions for performing these functions are, optionally, included in a non-transitory computer-readable storage medium or other computer program product configured for execution by one or more processors.

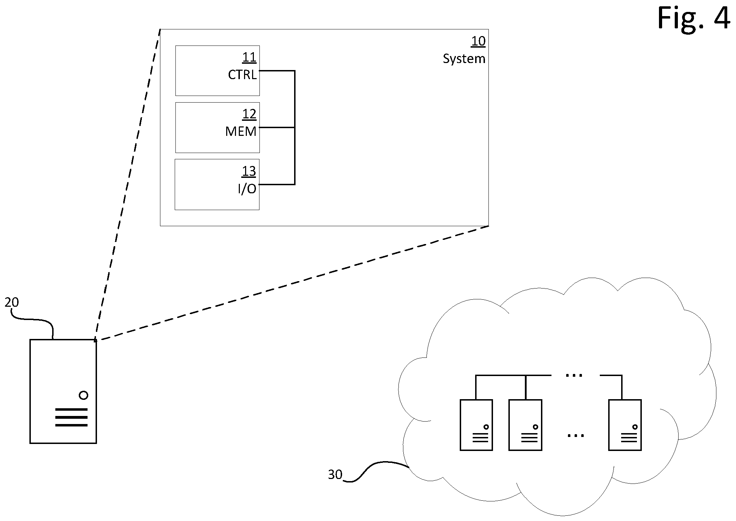

Fig. 4 is a schematic block diagram representation of a system 10 for generating an annotated dataset for training and/or verifying machine-learning algorithms in accordance with some embodiments. The system 10 comprises control circuitry (e.g. one or more processors) 11 configured to perform the functions of the method S100 disclosed herein, where the functions may be included in a non-transitory computer-readable storage medium 12 or other computer program product configured for execution by the control circuitry 11. In other words, the system 10 comprises one or more memory storage areas 12 comprising program code, the one or more memory storage areas 12 and the program code configured to, with the one or more processors 11, cause the system 10 to perform the method S100 according to any one of the embodiments disclosed herein.

The control circuitry 11 may physically comprise one single circuitry device. Alternatively, the control circuitry 11 may be distributed over several circuitry devices. The control circuitry 11 may comprise one or more processors, such as a central processing unit (CPU), microcontroller, or microprocessor. The one or more processors may be configured to execute program code stored in the memory 12, in order to carry out various functions and operations in addition to the methods disclosed herein. The processor(s) 11 may be or include any number of hardware components for conducting data or signal processing or for executing computer code stored in the memory 12. The memory 12 optionally includes high-speed random-access memory, such as DRAM, SRAM, DDR RAM, or other random-access solid-state memory devices, and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In more detail, the control circuitry 11 is configured to associate point clouds (203a-203d of Fig. 2) across a plurality of lidar output datasets in order to link each point cloud across the plurality of lidar output datasets that represent the same object, where the plurality of lidar output datasets comprises point-cloud representations of one or more objects over a time period. Then, for each object of the one or more objects, the control circuitry 11 is configured to align the associated point clouds representing the same object across the plurality of lidar output datasets using a point-cloud registration algorithm configured to spatially transform the point cloud of one or more lidar output datasets in order to align the associated point clouds representing the same object across the plurality of lidar output datasets into a globally consistent coordinate space. An example of aligned point clouds in accordance with some embodiments is shown in the bottom three plots 202a-202c of Fig. 2.

Further, for each object of the one or more objects, the control circuitry 11 is configured to, annotate 304 the aligned point clouds, and convert the annotation to an original coordinate space of the plurality of lidar output datasets so to obtain an annotation for each lidar output dataset of the plurality of lidar output datasets. An example of annotated and aligned point clouds is shown in the bottom three plots 302a-302c of Fig. 3, and an example of converted annotations is shown in the top plot 301 of Fig. 3. In some embodiments, the annotation is a 3D polyhedron annotation enclosing the aligned point clouds, such as a 3D bounding box annotation. In some embodiments, the annotation may additionally or alternatively comprise an object classification.

In accordance with some embodiments, the control circuitry 11 is configured to convert the annotation by inverting the spatial transformation performed during the alignment of the associated point clouds. Moreover, in some embodiments, the control circuitry 11 is configured to fine-tune one or more point clouds of the aligned point clouds, and re-align the associated point clouds by applying the point-cloud registration algorithm on any non-fine-tuned point clouds. Accordingly, the annotation may instead be performed on the re-aligned point clouds.

Fig. 4 further illustrates a server comprising the system according to any one of the embodiments disclosed herein, and a cloud environment comprising one or more servers according to any one of the embodiments disclosed herein.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the system 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various association steps, alignment steps, annotation steps, and conversion steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A method (S100) for generating an annotated dataset for training and/or verifying machine-learning algorithms, the method comprising:
associating (S101) point clouds across a plurality of lidar output datasets in order to link each point cloud across the plurality of lidar output datasets that represent the same object, wherein the plurality of lidar output datasets comprise point-cloud representations of one or more objects over a time period;
for each object of the one or more objects:
aligning (S103) the associated point clouds representing the same object across the plurality of lidar output datasets using a point-cloud registration algorithm configured to spatially transform the point cloud of one or more lidar output datasets in order to align the associated point clouds representing the same object across the plurality of lidar output datasets into a globally consistent coordinate space;
annotating (S106) the aligned point clouds; and
converting (S108) the annotation to an original coordinate space of the plurality of lidar output datasets so to obtain an annotation for each lidar output dataset of the plurality of lidar output datasets.

2. The method (S100) according to claim 1, wherein the step of converting the annotation comprises inverting (S109) the spatial transformation performed during the alignment of the associated point clouds.

3. The method (S100) according to claim 1 or 2, further comprising:
for each object of the one or more objects:
fine-tuning (S104) one or more point clouds of the aligned point clouds; and
re-aligning (S105) the associated point clouds by applying the point-cloud registration algorithm on any non-fine-tuned point clouds; and
wherein the annotation of the aligned point clouds is performed on the re-aligned point clouds.

4. The method (S100) according to any one of claims 1-3, wherein the step of annotating the aligned point clouds comprises generating (S107a) a three-dimensional (3D) polyhedron enclosing the aligned point clouds; and
wherein the step of converting (S108) the annotation comprises converting the 3D polyhedron to the original coordinate space of the lidar output datasets so to obtain a 3D polyhedron for each dataset of the plurality of datasets.

5. The method (S100) according to claim 4, wherein the step of annotating the aligned point clouds comprises generating (S107b) an object classification.

6. The method (S100) according to any one of claims 1-5, wherein the one or more objects are one or more rigid-body objects.

7. A computer program product comprising instructions which, when the program is executed by a computing device, causes the computing device to carry out the method (S100) according to any one of claims 1-6.

8. A computer-readable storage medium comprising instructions which, when executed by a computing device, causes the computing device to carry out the method (S100) according to any one of claims 1-6.

9. A system (10) for generating an annotated dataset for training and/or verifying machine-learning algorithms, the system comprising control circuitry (11) configured to:
associate point clouds (203a, 203b, 203c, 203d) across a plurality of lidar output datasets in order to link each point cloud across the plurality of lidar output datasets that represent the same object, wherein the plurality of lidar output datasets comprises point-cloud representations of one or more objects over a time period;
for each object of the one or more objects:
align the associated point clouds representing the same object across the plurality of lidar output datasets using a point-cloud registration algorithm configured to spatially transform the point cloud of one or more lidar output datasets in order to align the associated point clouds representing the same object across the plurality of lidar output datasets into a globally consistent coordinate space;
annotate the aligned point clouds; and
convert the annotation (304) to an original coordinate space of the plurality of lidar output datasets so to obtain an annotation for each lidar output dataset of the plurality of lidar output datasets.

10. The system (10) according to claim 9, wherein the control circuitry (11) is configured to convert the annotation (304) by inverting the spatial transformation performed during the alignment of the associated point clouds.

11. The system (10) according to claim 9 or 10, wherein the control circuitry (11) is configured to:
for each object of the one or more objects:
fine-tune one or more point clouds of the aligned point clouds; and
re-align the associated point clouds by applying the point-cloud registration algorithm on any non-fine-tuned point clouds; and
wherein the annotation of the aligned point clouds is performed on the re-aligned point clouds.

12. The system (10) according to any one of claims 9-11, wherein the control circuitry (11) is configured to annotate the aligned point clouds by generating a three-dimensional (3D) polyhedron enclosing the aligned point clouds; and
wherein control circuitry (11) is configured to convert the annotation by converting the 3D polyhedron to the original coordinate space of the lidar output data datasets so to obtain a 3D polyhedron for each dataset of the plurality of datasets.

13. The system (10) according to claim 12, wherein the control circuitry (11) is configured to annotate the aligned point clouds by generating an object classification.

14. A server (20) comprising the system (10) according to any one of claims 9-13.

15. A cloud environment (30) comprising one or more servers (20) according to claim 14.
